# EUROPEAN PATENT APPLICATION

(11) **EP 4 488 909 A1**
(43) Date of publication of application: **08.01.2025**
(21) Application number: 23763369.8
(22) Date of filing: 24.02.2023
(51) Int. Cl.: G06Q 20/06, G06Q 20/26, G06Q 40/02

(54) **ELECTRONIC MONEY SERVICE SYSTEM AND ELECTRONIC MONEY SETTLEMENT METHOD**

(30) Priority: 02.03.2022 JP 2022032121
(71) Applicant: MRS Holdings Co., Ltd., Tokyo, 150-0022 (JP)
(72) Inventor: MATSUBARA Takashi, Tokyo 150-0022 (JP)
(74) Representative: Hoffmann Eitle
(86) International application number: PCT/JP2023/006857
(87) International publication number: WO 2023/167110

(57) **Abstract**

The present invention is an electronic money settlement method implemented by an electronic money business operator system that provides an electronic money service. The method comprises: managing, for each user who uses the electronic money service, an electronic money account of the user and a deposit account of the user by associating the electronic money account and the deposit account to each other; virtually setting the balance of the electronic money account to be linked to the balance of the deposit account; and requesting remittance processing to a financial institution system such that, in response to an electronic money settlement, the money amount for the settlement is directly remitted from the deposit account associated with the electronic money account to a deposit account at a financial institution of a beneficiary who should receive the money amount through the settlement.

## Description

### TECHNICAL FIELD

The present invention relates to an electronic money service system (electronic money settlement system) and an electronic money settlement method.

### BACKGROUND ART

Various electronic settlement methods (sometimes referred to as "cashless settlement") are currently in widespread use. A credit card is an example of a postpaid type of electronic settlement methods. A user will cause a credit card company to pay for the merchandise, or the like, at an affiliated store (sales store), and at a later date, the user will make the payment via debit from the deposits in such user's own deposit account in accordance with the bill from the credit card company. Because a certain amount of the user's credit is typically required in order to use a credit card, a credit card company sets a usage limit according to the credit provided (credit provision) to the user based on prior screening.

On the other hand, electronic money is a prepaid type of electronic settlement means. A user embodies ("charges") electronic monetary value information (referred to as "points", "value", *etc.)* onto a physical or electronic card ("prepaid card") in advance in exchange for cash, and at the time of settlement at an affiliated store, the user pays for the merchandise, or the like, from the monetary value information embodied onto such prepaid card. An electronic money business operator that provides electronic money services will aggregate the payments for each affiliated store and make payment to the affiliated store at a later date. A prepaid card is associated with an "electronic money account", and monetary value information corresponding to the money amount charged is recorded in the electronic money account. When charging, a choice can be made from debiting from the deposits in a deposit account and/or paying by way of a credit card.

Further, a debit card is an electronic settlement means in which settlement is made immediately from the deposits in a deposit account. In Japan, this is known as "J-Debit". With a debit card, in order to secure a credit line, a money amount equivalent to the payment of the merchandise, or the like, is immediately debited from the deposit in the user's deposit account at the time of settlement, such money amount is temporarily deposited in the bank's temporary account, and the bank then makes the payment to the affiliated store at a later day.

The aforementioned electronic settlement means, such as electronic money, can be considered as being a transfer of funds via deposit accounts and/or electronic money accounts. For example, in the case of electronic money, funds withdrawn from a user's deposit account are deposited into an electronic money account, and the settlement of the merchandise, or the like, by way of electronic money at an affiliated store reduces the monetary value information equivalent to that payment from the electronic money account. Then, at a later date, the payment (usually a fee is deducted, but this is omitted here) is deposited from the deposit account of the electronic money business operator to the deposit account of the affiliated store.

For example, Patent Document 1 below discloses a deposit system that makes use of a card which allows for safe receipt of money by having: a money receipt ID which can only be used for receiving money; and a spending ID which can be used for spending money, and this deposit system is configured such that, upon receiving remittance request information including the money receipt ID and a remitter ID at a bank account management server device which manages a bank account for a deposit, it performs processing for remittance to an account of the card's management company, and withdrawal can be made, by appropriately changing the spending limit of the card in accordance with the processing, using the card which uses the spending ID.

In addition, Patent Document 2 below discloses the technology for providing a highly convenient funds transfer service for users.

### PRIOR ART DOCUMENTS

### PATENT DOCUMENTS

Patent Document 1: WO 2013/186931 A1
Patent Document 2: JP 2021-26776 A

### SUMMARY OF THE INVENTION

### PROBLEMS TO BE SOLVED BY THE INVENTION

In the remittance processing by the system shown in Patent Document 1 above, both the first deposit by the remitter for the remittance request and the withdrawal of the received amount by the beneficiary require procedures through a financial institution, such as a bank.

Therefore, in the case of using electronic money services provided by an electronic money business operator, there has been a problem to the effect that users would need to transfer funds from their own deposit accounts in the bank to their electronic money accounts in the electronic money business operator before using such service, and this is a hassle for the users.

Moreover, in Japan, electronic money is subject to restrictions under laws related to funds settlement (the Payment Services Act). Under the Payment Services Act, unless the full amount of funds is withdrawn from the user's electronic money account and deposited into the deposit account, the balance of the electronic money account is deemed to be retained funds (outstanding obligations) in the process of funds transfer, and thus, the funds transfer business operator (*i.e.,* the electronic money business operator) is obliged to deposit a money amount equal to or greater than that of the retained funds with a deposit office for protecting the user's assets. Therefore, in the system in Patent Document 1 above, unless the beneficiary withdraws money from his/her account within the card management company, the card management company needs to deposit a money amount equivalent to the balance of the beneficiary's account in accordance with the Payment Services Act, and thus, there has been a problem to the effect that there is an extremely large funds burden on the card management company.

In the case of settlement of the merchandise, or the like, by electronic money, from the user's perspective, the monetary value information is immediately deducted from the user's electronic money account, but from the affiliated store's perspective, the money amount equivalent to the payment will be deposited into the deposit account in accordance with the affiliated store agreement, for example, in the following month. Therefore, for the affiliated store (beneficiary), because the payment is not yet received at the time of sale, this leads to an increase in accounts receivable, which greatly affects the cash management of the affiliated store.

Therefore, an object of the present invention is to achieve a highly convenient electronic money service for users, affiliated stores, and electronic money business operators.

More specifically, one of the objects of the present invention is to provide an electronic money settlement scheme that eliminates the hassle of users having to deposit money into an electronic money account.

Another object of the present invention is to provide an electronic money settlement scheme that allows, in electronic money settlement, a money amount equivalent to monetary value information deducted from the users' electronic money account to be immediately deposited into the deposit account of the affiliated store.

A further object of the present invention is to provide an electronic money settlement scheme that allows, under the Payment Services Act, electronic money business operators to be freed from deposit obligations that depend on the balance of the electronic money accounts.

A even further object of the present invention is to provide a new electronic money settlement scheme that combines the convenience of postpaid type electronic settlement means, such as credit cards.

### MEANS FOR SOLVING THE PROBLEMS

The present invention for solving the above-described problems is configured to include the matters specifying the invention or technical features indicated below. The invention may be understood as an invention relating to a product (apparatus, system, or computer program) or as an invention of a method.

The present invention according to an aspect is an electronic money settlement method implemented by an electronic money business operator system that provides an electronic money service. The electronic money settlement method comprises, by the electronic money business operator system: managing, for each user who uses the electronic money service, an electronic money account of the user and a deposit account of the user by associating the electronic money account and the deposit account with each other; virtually setting a balance of the electronic money account to be linked to a balance of the deposit account; and requesting remittance processing to a financial institution system such that, in response to an electronic money settlement, the money amount for the settlement is directly remitted from the deposit account associated with the electronic money account to a deposit account at a financial institution of a beneficiary who should receive the money amount through the settlement.

The virtually setting includes virtually setting the balance of the electronic money account of the user based on the balance of the deposit account obtained by making a balance inquiry about the deposit account of the user to the financial institution system.

In addition, the virtually setting includes making a balance inquiry about the deposit account of the user if there is a communication from an electronic money app on an information communication terminal device of the user.

In addition, the method further comprises, by the electronic money business operator system, receiving a settlement approval request from a settlement terminal device in the electronic money settlement, and sending, to the settlement terminal device, a settlement approval indicating approval of the settlement based on the balance of the electronic money account.

In addition, making a request for the remittance processing includes sending a remittance request to the financial institution system based on the settlement approval.

In addition, the method further comprises, by the electronic money business operator system, reducing the balance of the electronic money account according to the money amount for the settlement.

In addition, the method further comprises, upon receiving a remittance completion notification indicating that the financial institution system has completed the remittance processing, the electronic money business operator system verifying, based on the remittance completion notification, whether the balance of the electronic money account after the reduction matches the balance of the deposit account.

The present invention according to another aspect is an electronic money settlement method implemented by an electronic money business operator system that provides an electronic money service, such electronic money settlement method comprising the electronic money business operator system: managing, for each user who uses the electronic money service, an electronic money account of the user and at least one account other than the electronic money account by associating the electronic money account and the at least one account with each other; and virtually setting a balance of the electronic money account based on a balance of the at least one account.

Here, the at least one account is at least one of the user's deposit account or the user's credit card account.

In addition, the virtually setting the balance includes virtually setting the balance based on a balance of the deposit account and a credit balance of the credit card account.

In addition, the virtually setting the balance includes virtual setting the balance such that there is a link to a fluctuation in the balance of the deposit account.

In addition, the virtually setting the balance includes virtually setting the balance such that there is a link to a fluctuation in the credit balance of the credit card account.

In addition, the virtually setting the balance includes, by the electronic money business operator system, setting the balance of the electronic money account based on a credit amount setting request sent from an electronic money app on an information communication terminal device of the user.

The credit amount setting request is prepared based on a credit amount approval indicating approval of a credit amount responding to a credit amount approval request sent to a credit card business operator system by the electronic money app.

The present invention according to a further aspect is an electronic money business operator system that provides an electronic money service. The system comprises: means for managing, for each user who uses the electronic money service, an electronic money account of the user and a deposit account of the user by associating the electronic money account and the deposit account with each other; means for virtually setting a balance of the electronic money account to be linked to a balance of the deposit account; and means for making a request for remittance processing to a financial institution system such that, in response to an electronic money settlement, a money amount for the settlement is directly remitted from the deposit account associated with the electronic money account to a deposit account at a financial institution of a beneficiary who should receive the money amount through the settlement.

In the present disclosure, the term "means" does not merely mean a physical means but also encompasses the case where the functions of such means are implemented by software. In addition, a function of one means may be implemented by two or more physical means, and functions of two or more means may be implemented by one physical means.

Further, in the present disclosure, the term "system" includes an ensemble where multiple apparatuses (or functional modules implementing specific functions) are logically assembled, regardless of whether each apparatus or functional module is physically configured as a single entity or as a separate entity.

### EFFECT OF THE INVENTION

According to the present invention, a highly convenient electronic money service for users, affiliated stores, and electronic money business operators is achieved.

In particular, users do not need to worry about the balance of the electronic money account and are freed from the hassle of making a deposit into the electronic money account as long as there is a balance in the deposit account.

In addition, in the electronic money settlement, the affiliated stores can immediately receive in their deposit accounts a money amount equivalent to the monetary value information deducted from the users' electronic money account, and cash management of the affiliated stores will therefore be improved.

In addition, regarding the deposit obligations that depend on the balance of the electronic money account under the Payment Services Act, cash management of the electronic money business operators will be improved since the electronic money business operators can keep the deposits low.

In addition, according to the present invention, since a new electronic money settlement scheme that combines the convenience of postpaid type electronic settlement means, such as credit cards, is achieved, the convenience of users' electronic money usage will be further improved.

Other technical features, objects, and effects or advantages of the present invention will become apparent by the following embodiments described with reference to the attached drawings.

### BRIEF DESCRIPTION OF THE DRAWINGS

FIG. 1 is a block diagram showing an example of an electronic money service system according to an embodiment of the present invention.
FIG. 2 is a block diagram showing an example of a schematic configuration of a financial institution system of a funds transfer management system according to an embodiment of the present invention.
FIG. 3 is a block diagram showing an example of a configuration of an electronic money business operator system according to an embodiment of the present invention.
FIG. 4 is a diagram showing an example of a data structure of a user information database of an electronic money business operator system according to an embodiment of the present invention.
FIG. 5 is a block diagram showing an example of a schematic configuration of an information communication terminal device according to an embodiment of the present invention.
FIG. 6 is a flowchart showing an example of balance synchronization processing among different accounts performed by an electronic money business operator system according to an embodiment of the present invention.
FIG. 7 is a sequence diagram for describing an example of electronic money settlement processing in an electronic money service provided by an electronic money service system according to an embodiment of the present invention.
FIG. 8 is a diagram for describing an example of synchronization among different accounts in an electronic money service according to an embodiment of the present invention.
FIG. 9 is a block diagram showing an example of an electronic money service system according to an embodiment of the present invention.
FIG. 10 is a diagram for describing an example of synchronization among different accounts in an electronic money service according to an embodiment of the present invention.
FIG. 11A is a flowchart showing an example of electronic money settlement processing in an electronic money service provided by an electronic money service system according to an embodiment of the present invention.
FIG. 11B is a flowchart showing an example of electronic money settlement processing in an electronic money service provided by an electronic money service system according to an embodiment of the present invention.
FIG. 12A is a flowchart showing another example of electronic money settlement processing in an electronic money service provided by an electronic money service system according to an embodiment of the present invention.
FIG. 12B is a flowchart showing another example of electronic money settlement processing in an electronic money service provided by an electronic money service system according to an embodiment of the present invention.
FIG. 13 is a flowchart showing a further example of electronic money settlement processing in an electronic money service provided by an electronic money service system according to an embodiment of the present invention.
FIG. 14 is a diagram for describing an example of synchronization among different accounts in an electronic money service according to an embodiment of the present invention.
FIG. 15 is a diagram showing an example of a concept of synchronization among different accounts in an electronic money service according to an embodiment of the present invention.
FIG. 16 is a diagram showing an example of a hardware configuration configuring an electronic money business operator system according to an embodiment of the present invention.

### DESCRIPTION OF THE EMBODIMENTS

Embodiments of the present invention will be described below with reference to the drawings. However, the embodiments described below are only illustrations, and there is no intention to exclude the application of various variations or technologies not expressly stated below. The present invention may be implemented with various variations (*e.g*., by combining each embodiment) without departing from its spirit. In addition, the same or similar parts will be denoted with the same or similar references in the following descriptions of the drawings. The drawings are schematic and do not necessarily correspond to the actual dimensions or ratios. Parts may also be included wherein the dimensional relationship or ratio between each other is different among the drawings.

The gist of the present invention is to link (synchronize) balances among different accounts owned by a user. Here, an "account" means a material body (*i.e.,* an entity of some sort) for managing money or monetary value information for each user, examples of which include, without limitation, a deposit account, an electronic money account, a credit card account (a credit line), and the like. In general, the term "credit card account" is used to mean a deposit account from which credit card payments are debited; however, the term "credit card account" as used in the present disclosure is to be distinguished from this meaning. In addition, the "electronic money service" as used in the present disclosure is to be widely interpreted, as described below, so as to refer to a new service that includes elements or convenience of a postpaid type of electronic settlement means, wherein such service goes beyond the conventional concept of services using a prepaid type of electronic settlement means.

In addition, the term "synchronization" means that, in an electronic money service, when the balance of one account fluctuates, the balance of other accounts also fluctuates accordingly. In this regard, however, as described below, the balance of the electronic money account does not indicate the monetary value information equivalent to the funds actually deposited from the user in advance to the electronic money business operator, but rather it indicates a virtual balance based on the balance of the deposit account and/or credit card account.

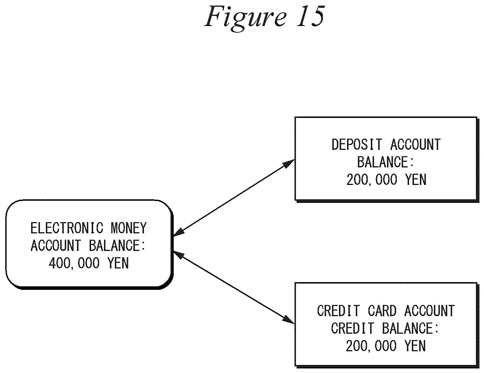

For example, as shown in FIG. 15, if the balance of a user's deposit account is 200,000 yen (this can be any legal currency of the country concerned) and the credit balance of the credit card account is 200,000 yen, then the balance of the electronic money account will be 400,000 yen, the sum of these balances. As will be described in more detail below, the user can use electronic money settlements as if the sum of these balances is currently in his/her electronic money account without actually charging 400,000 yen.

### [First Embodiment]

The present embodiment is characterized in that the balance of the user's electronic money account is synchronized with the balance of the deposit account.

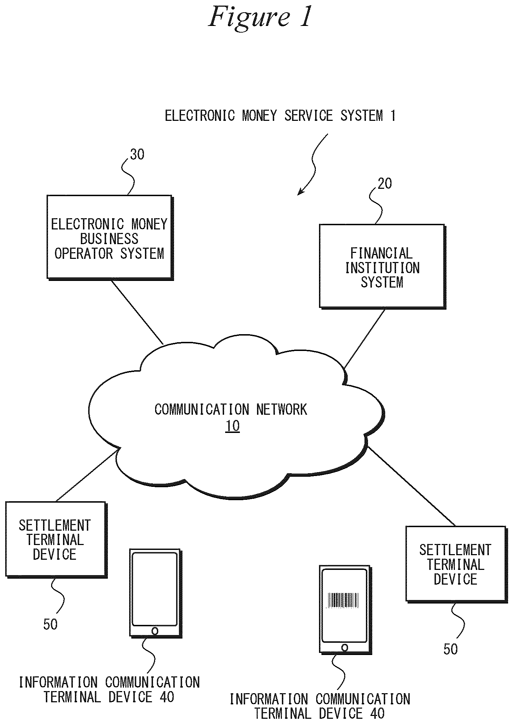

FIG. 1 is a block diagram showing an example of an electronic money service system according to an embodiment of the present invention. As shown in FIG. 1, the electronic money service system 1 of the present embodiment may be configured to include a financial institution system 20 and an electronic money business operator system 30 that are communicably interconnected via, for example, a communication network 10. In addition, the electronic money service system 1 may include an information communication terminal device 40 and a settlement terminal device 50 that are communicably connected to the communication network 10. As will be described below, the information communication terminal device 40 is used to function as an electronic virtual card that implements an electronic money service function, and may be replaced with a conventional physical card. In the present disclosure, the settlement terminal device 50 will be described as a device installed in a physical store, but it may be a device in a virtual store, such as so-called on-line shopping.

The communication network 10 may include, for example, an IP-based computer network (hereinafter referred to as the "IP network"). The communication network 10 may include a form of a Content Delivery Network (CDN). In the present disclosure, the communication network 10 is used in a broad concept to include the Internet constructed by IP networks, but it is not limited to such IP networks and is not intended to exclude networks of other protocols that allow for communication between nodes. For example, predetermined nodes, such as the financial institution system 20 and another financial institution system not shown, may be connected by a dedicated network. In addition, the financial institution system 20 may include, for example, the communication network 10 as an intranet. In addition, the communication network 10 may include wireless networks (*e.g.,* Wi-Fi (registered trademark), *etc*.) constructed by wireless base stations or wireless access points that are not shown. In addition, the communication network 10 may include a mobile communication network that conforms to the mobile communication system standards.

The financial institution system 20 is a so-called banking system managed and operated by a financial institution or its entrusted party. In the present disclosure, a "financial institution" means a financial institution that manages or handles deposit accounts or accounts subject to the deposit guarantee system (hereinafter collectively referred to as "deposit accounts"), which are regulated by the Bank Act and equivalent laws. For example, commercial banks and credit unions are included in financial institutions in the present disclosure. A "bank account" is a form of a deposit account. It should be noted that, in the present disclosure, "deposit accounts" are sometimes referred to simply as "accounts" or "bank accounts" customarily or conveniently, but are to be distinguished from "electronic money accounts" managed by electronic money business operators.

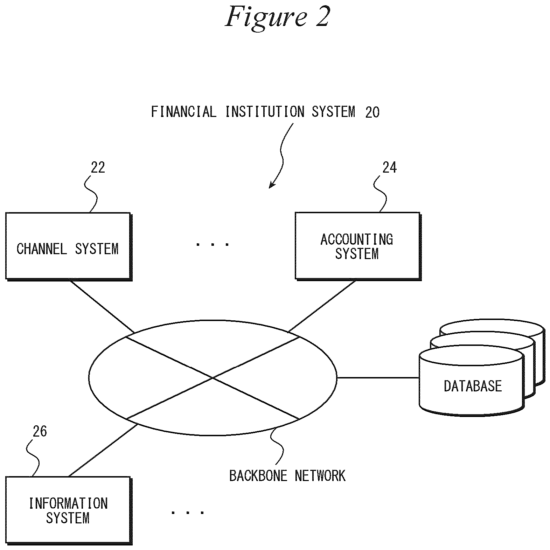

The financial institution system 20 may include various host computers and database systems that are constructed by being structured and organized by financial institution functions or operations, such as a channel system 22, an accounting system 24, and an information system 26, as schematically shown in FIG. 2, for example. These systems may be connected via backbone networks including, for example, a hub or an Enterprise Service Bus (ESB). The backbone network is a form of the communication network 10. In addition, the financial institution system 20 may include open systems that use general-purpose computing devices.

A financial institution typically has a head office and several branch offices that manage deposit accounts of the respective users. Such head office and/or branch offices (which may hereinafter be referred to simply as "branch offices") may be virtual stores, rather than physical stores, and they can be something like so-called net-banks. Alternatively, a financial institution may have a dedicated branch office for the electronic money business operator providing the electronic money services in the present disclosure. As is known, a user may apply for and open such a deposit account by ways such as on-line procedures.

The channel system 22 controls connections corresponding to various channels, such as systems or ATMs of, for example, stores (including branch offices, and branch offices for business operators only - the same will apply hereinafter), and Internet banking services. The accounting system 24 manages the transactions (deposit account ledgers) of the deposit accounts of customers or depositors (users), such as companies and individuals. The accounting system 24 assumes one of the core operations of financial institutions, and may therefore be referred to as a core system with the inclusion of other core operations. The information system 26 manages data warehouses or databases that hold information about customers, transactions, and the like, in detail (transaction) units, as well as business management information of financial institutions. The above-mentioned system configuration in the financial institution system 20 is an example, and the definition or scope thereof may vary depending on the system vendor or financial institution, and this should not affect the interpretation of the present invention.

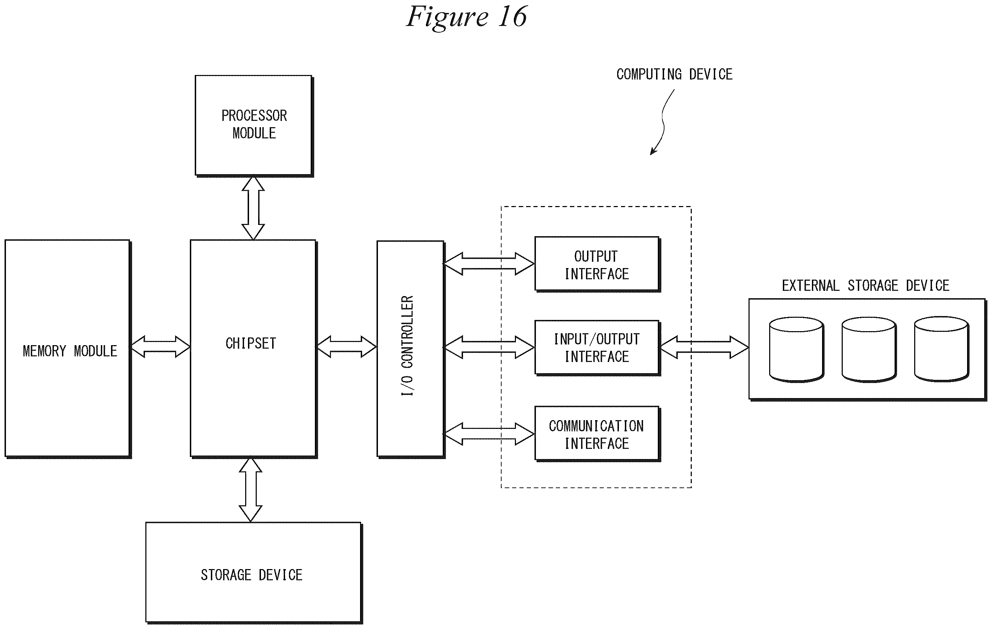

Returning to FIG. 1, the electronic money business operator system 30 is a computer system managed and operated by an electronic money business operator or its entrusted party. In the present disclosure, an electronic money business operator is a concept that corresponds to an "issuer of prepaid payment instruments" set forth in the Payment Services Act, but it should not be narrowly construed by the Payment Services Act only, and should rather be construed as a concept derived from the gist of the present invention. Electronic money business operators may be different business entities distinguished from financial institutions. An electronic money business operator may use the electronic money business operator system 30 to provide a funds settlement service based on monetary value information (*e.g*., points) (hereinafter referred to as the "electronic money service"). The hardware configuration of the computing devices configuring the electronic money business operator system 30 is shown, for example, in FIG. 16, but the details of such configuration will be omitted because such configuration is already known. The electronic money business operator system 30 implements electronic money services by cooperating with various hardware resources, such as by executing an electronic money service program under the control of a processor.

The electronic money business operator system 30 manages the balance of the electronic money account of the customer or member (*i.e*., the user) and may provide electronic money services to the user up to such balance. Typically, for such electronic money services, the user may be provided, in advance, with a physical or virtual unique medium (*e.g*., a card or pass) associated with the electronic money account. The monetary value information may be managed, for example, by the so-called "stored-value method" stored on an IC chip installed in a physical card or an information communication terminal device, or by a server management method, in which the information is managed centrally on a server. Payment settlement by electronic money (payment of the settlement amount) is an aspect of electronic money services. In addition, as another aspect thereof, there is a service of performing transmission and receipt of money between electronic money accounts of the same or different users; namely, a funds transfer service. In the following description, remittances by electronic money business operators may be referred to as "funds transfers" in order to be distinguished from "remittances" by the financial institutions.

In the present disclosure, the electronic money business operator system 30 manages, for example, information about the user's deposit account and credit card account (a credit line) to be synchronized with the user's electronic money account for the provision of electronic money services. Here, the term "synchronization" means that, in the electronic money services, when the balance of one account fluctuates, the balance of other accounts also fluctuates, accordingly.

As an example, the balance of the user's electronic money account is set so as to match the balance of the deposit account. As another example, the balance of the electronic money account is set so as to match the balance of the deposit account, up to a predetermined upper limit amount. In other words, if the predetermined upper limit amount is 100,000 yen, even if the balance of the deposit account increases by 30,000 yen from 80,000 yen to 110,000 yen, the balance of the electronic money account will not be set to 100,000 yen or higher. As a further example, the balance of the electronic money account is set to the sum of the balance of the deposit account and the available balance of the credit card account (*i.e*., credit balance).

In this regard, however, the balance of the electronic money account mentioned above is not the monetary value information equivalent to the funds actually deposited from the user to the electronic money business operator, but is instead a virtual balance based on the balance of the deposit account and/or credit card account. In other words, the sum of the balance of the electronic money account and the balance of the deposit account, and the like, is not the amount that the user can use (consume). The electronic money business operator system 30 manages the balance of the user's electronic money account based on the balance of the deposit account and/or the credit balance of the credit card account.

The information communication terminal device 40 is a terminal device operated by the user for the use of electronic money services. The information communication terminal device 40 is typically a mobile or portable computing device owned by the user, examples of which may include a feature phone, a smartphone, a PDA, a hand-held computer, a tablet computer, and any other intelligent devices. In the present disclosure, the information communication terminal device 40 is a smartphone.

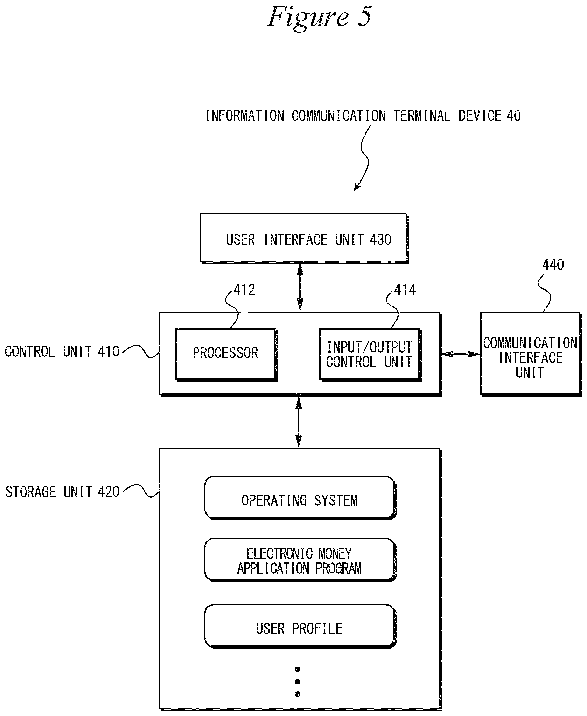

The information communication terminal device 40 is typically configured from hardware resources, such as a CPU (processor), a chipset, memory, a communication module, and a user interface (*e.g*., a display or touch panel, a speaker and a vibrator), and software resources, such as an operating system (which may be configured so as to include, for example, a kernel, various device drivers, standard libraries, *etc.)* (hereinafter referred to as the "OS") (see FIG. 5). The information communication terminal device 40 executes various application programs on the OS under the control of the processor, and achieves desired functions.

In the present disclosure, the information communication terminal device 40 is installed with an application program, as one of the application programs, for achieving electronic money service functions (*e.g*., deposit (charge) and withdrawal of electronic money, payment by electronic money, transmission and receipt of electronic money, *etc.)* (hereinafter referred to as the "electronic money application program") in the information communication terminal device 40. In other words, the information communication terminal device 40 may provide users with functions for electronic money services, such as electronic settlement services and funds transfer services, by executing the electronic money application program under the control of the processor. In the following description, the entity of the electronic money service function achieved by the execution of the electronic money application program on the information communication terminal device 40 will be referred to as the "electronic money app".

For example, in order to use the electronic money service, the user may be required to perform authentication to log into the electronic money account via the electronic money app. For example, when the user starts the electronic money app on the information communication terminal device 40 and enters an account ID and password on the login screen, the information communication terminal device 40 may send a login request (user authentication request) to the electronic money business operator system 30 and allow the user to use the electronic money app in response to the login authentication by the electronic money business operator system 30. Alternatively, the login authentication may be performed in the electronic money app on the information communication terminal device 40, and the information communication terminal device 40 may send the result of the login authentication to the electronic money business operator system 30.

In addition, at the time of electronic money settlement, the user can cause the balance of the electronic money account to be displayed on the user interface of the information communication terminal device 40. As described above, the balance of the electronic money account displayed on the user interface of the information communication terminal device 40 is not based on the money amount paid in advance by the user to the electronic money business operator, but is instead the money amount based on the balance of the user's deposit account and/or the credit balance of the credit card account.

In addition, at the time of electronic money settlement, the user may perform settlement by electronic money either by: causing a geometric pattern to be displayed on the user interface of the information communication terminal device 40 and then causing the settlement terminal device 50 at the store, or the like, to read the pattern; or by causing a geometric pattern presented by the store, or the like, to be ready by the information communication terminal device 40. The geometric pattern may be, for example, a barcode or a QR code (registered trademark). As another example, the user may perform settlement by electronic money in a contactless manner by, for example, bringing the information communication terminal device 40 close to the settlement terminal device or placing the information communication terminal device 40 over the settlement terminal device.

As described above, the information communication terminal device 40 may be used as a so-called virtual "electronic money card" achieved by the electronic money service function, and accordingly, a conventional physical card may be used as an electronic money card, instead of the information communication terminal device 40.

The settlement terminal device 50 is a terminal device installed, for example, at an affiliated store, or the like, for performing settlement by electronic money. As an example, the settlement terminal device 50 may be a point-of-sale information management terminal device (POS register) operated by a store clerk at, for example, a convenience store, or the like. As described above, the settlement terminal device 50, for example, may send a settlement approval request to the electronic money business operator system 30 by reading the geometric pattern displayed on the user interface of the information communication terminal device 40, and then perform settlement in response to the settlement approval based on the balance confirmation of the electronic money account by the electronic money business operator system 30.

In the electronic money service system 1 configured as above, the electronic money business operator system 30 performs control such that balances are synchronized among different accounts owned by the user. For example, the electronic money business operator system 30 may set the balance of a user's electronic money account to be synchronized with the balance of the user's deposit account. Note that the balance of the electronic money account is not set by the actual transfer of funds. In other words, the "synchronization" here does not mean that: the funds are actually withdrawn from the user's deposit account; such funds are deposited into a deposit account managed by the electronic money business operator system 30; and thereby this is reflected in the balance of the electronic money account of the user. The electronic money business operator system 30 inquires about the balance of the user's deposit account and presents such balance to the user as the balance of the user's electronic money account. Accordingly, from the user's perspective, if there is a deposit in the deposit account, monetary value information equivalent to the amount of such deposit will be charged in the electronic money account, even if charging is not performed to the electronic money account. On the other hand, as the balance of the user's electronic money account is not the balance deposited from such user in advance to the electronic money business operator system 30, it will not be deemed as retained funds, and thus, the electronic money business operator may be exempt from the deposit obligations.

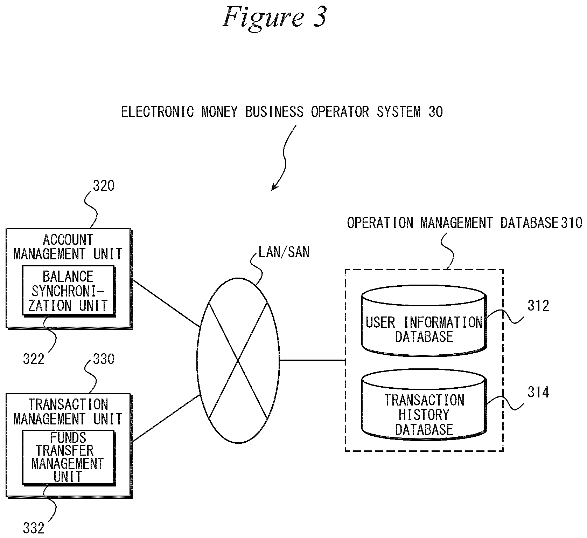

FIG. 3 is a block diagram showing an example of a configuration of an electronic money business operator system according to an embodiment of the present invention. As shown in FIG. 3, the electronic money business operator system 30 may be configured schematically to include, in relation to the electronic money services in the present disclosure, for example: an operation management database 310; an account management unit 320; and a transaction management unit 330. These components are connected through, for example, a LAN. In addition, although not shown, the electronic money business operator system 30 may include a mail server.

The operation management database 310 is a database system for managing data related to the overall operations of electronic money business operators, and it may be configured to include a user information database 312 and a transaction history database 314.

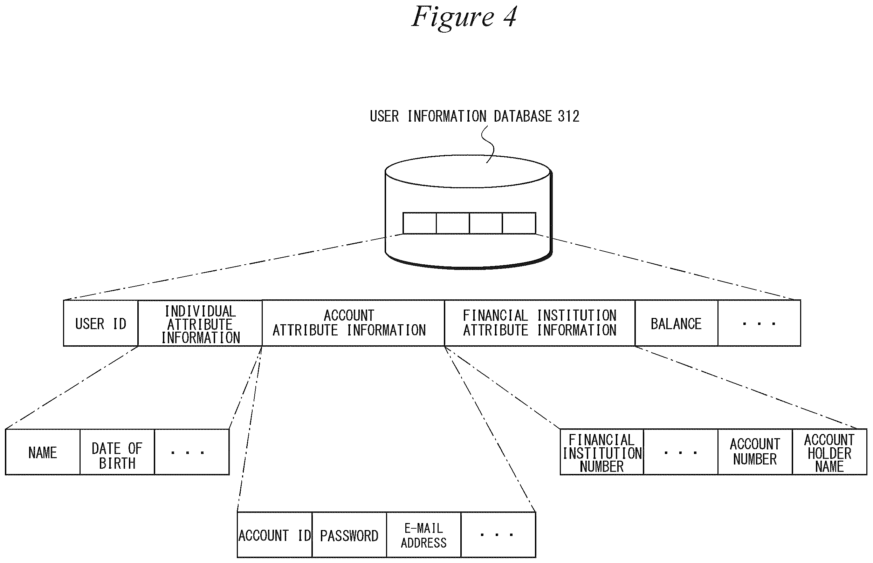

The user information database 312 is a database in which information about the user (hereinafter referred to as "user information") is stored. The user information is an electronic money account that contains information necessary to provide electronic money services, such as funds transfer and/or electronic money settlement. As shown in FIG. 4, the user information database 312 may be configured to include, for each user: individual attribute information (*e.g*., name, date of birth, address, telephone number, individual number, *etc*.); account attribute information (*e.g*., account ID, e-mail address); financial institution attribute information (*e.g*., financial institution number, branch office number, account type, account number, account holder name, *etc*.); and balance. That is, the user's electronic money account is associated with the deposit account of a financial institution. In addition, as will be described in other embodiments, the user's electronic money account may be associated with different accounts, such as the deposit account of the financial institution and/or the credit card account. As described above, an account ID may be configured from, for example, a money receipt ID that can only be used for receiving money and a spending ID that can only be used for spending money (settlement). The balance is the value indicated by the monetary value information calculated based on the user's transaction history in the transaction history database 314. It should be noted that although the user information shown in FIG. 4 is configured to identify an individual user by a user ID, any information may be used that uniquely identifies the user, and an account ID or an e-mail address may be used as the user ID. Typically, the user information is managed securely, such as in hashed or encrypted form.

The transaction history database 314 is a database in which data of all or part of the transactions made by the user in the electronic money services (hereinafter referred to as "transaction history data") is recorded as a history. The user's transaction history data may be managed in association with the user ID, and the like, in the user information database 312. The transaction history data may be recorded for each predetermined account item (*e.g*., deposit, withdrawal, *etc.).* Alternatively or additionally, the electronic money business operator system 30 may include an accounting database in which the user's accounting transactions are recorded.

Returning to FIG. 3, the account management unit 320 is a component that comprehensively manages the accounts of users registered with the electronic money business operators. The account management unit 320 may accept a login request from the information communication terminal device 40 caused by starting the electronic money app on the user's information communication terminal device 40, and perform login authentication.

In addition, the account management unit 320 may be configured to include a balance synchronization unit 322 for synchronizing the balances of electronic money accounts with the balances of deposit accounts of financial institutions. The balance synchronization unit 322 may inquire and obtain the balance of a deposit account via an application programming interface (API) connection with the financial institution system 20, and thereby update the balance in the user information database 312. In the present example, the balance synchronization unit 322 is configured as part of the account management unit 320, but this is not a limitation and it may also be configured separately from the account management unit 320, or it may also be configured as part of the transaction management unit 330 described below.

The transaction management unit 330 records and manages the user's transactions as a transaction history using the transaction history database 314. The transaction management unit 330 may be configured to include a funds transfer management unit 332 that executes funds transfer processing between the user's accounts. In the present example, the funds transfer management unit 332 is configured as part of the transaction management unit 330, but this is not a limitation and it may also be configured separately from the transaction management unit 330.

As an example, when a user requests payment settlement by electronic money using the information communication terminal device 40, the transaction management unit 330: accepts a settlement approval request from a settlement terminal device 50 of an affiliated store; refers to the user information database 312 to determine if the balance of the user's electronic money account is greater than the settlement amount; and if it is determined that the balance of the electronic money account is greater than the settlement amount, sends a settlement approval indicating approval of the settlement to the settlement terminal device 50, and performs the settlement processing (accounting transaction) to complete the settlement. The settlement processing includes requesting the financial institution system 20 to make a remittance. That is, the transaction management unit 330 requests the financial institution system 20 to make a remittance of funds equivalent to the payment from the user's deposit account to the deposit account of the affiliated store (*i.e.,* the beneficiary). In response, the financial institution system 20 immediately withdraws the money amount equivalent to the payment from the user's deposit account and deposits such amount into the deposit account of the affiliated store. In this case, the financial institution system 20 does not count the amount equivalent to the payment in the temporary account, and this is a difference from the J-Debit (which is the name of a debit service in Japan).

FIG. 5 is a block diagram showing an example of a schematic configuration of an information communication terminal device according to an embodiment of the present invention. More specifically, as shown in FIG. 5, the information communication terminal device 40 may be configured to include a control unit 410, a storage unit 420, a user interface unit 430, and a communication interface unit 440. FIG. 5 shows those components that are of particular relevance to the present disclosure from among the various components of the information communication terminal device 40. Such components may be the hardware resources themselves, or may alternatively be achieved by a processor of the information communication terminal device 40 executing the electronic money application program on the OS in cooperation with various hardware resources.

The control unit 410 is a component for controlling the information communication terminal device 40 comprehensively in order to make the information communication terminal device 40 function as an electronic money app for electronic money services, and it is typically configured to include the processor 412 and the OS (including various device drivers, *etc*.) of the information communication terminal device 40. In other words, the electronic money app (*i.e.,* the virtual device) is implemented on the information communication terminal device 40 by the processor 412 executing the electronic money application program.

An input/output control unit 414 is a component embodied by the functions of the OS, and it may control input/output access with each of the storage unit 420, the user interface unit 430, and the communication interface unit 440.

The storage unit 420 is a component that stores various programs and datasets, and is typically configured to include a memory device to be used by the processor 412 of the information communication terminal device 40. As an example, the storage unit 420 stores an OS, an electronic money application program, a user profile, and the like. The electronic money application program may be downloaded from a predetermined website, or the like, or alternatively, it may be pre-installed. The electronic money application program may be configured to include an application program body for using the electronic money service and a sub-program or module for implementing the funds transfer management method in the present disclosure. Alternatively, the electronic money application program may be configured only from a sub-program or module for implementing the electronic money settlement method in the present disclosure. The user profile may include all or at least part of the individual attribute information, the electronic money account information, and the deposit account information, as data pertaining to the electronic money services in the present disclosure.

The user interface unit 430 is a component that allows the user to interactively operate the information communication terminal device 40, and it may be configured to include an input/output device consisting of a touch panel that integrates a display and a position input mechanism. As an example, depending on the user's predetermined operation on the user interface unit 430, the user interface unit 430 displays a predetermined screen (*e.g*., a login screen, a balance display screen, and a payment screen, *etc.).* The payment screen may display the geometric pattern for electronic money settlement.

The communication interface unit 440 is a component that transmits/receives, via the communication network 10, various types of data to/from other external apparatuses, such as the electronic money business operator system 30, the financial institution system 20, and similar systems, and it is typically configured to include a communication interface circuit or chipset. In the present disclosure, the communication interface unit 440 accesses the electronic money business operator system 30 to inquire with the electronic money account, and/or to perform management and settlement thereof, and receives an e-mail about the completion of the remittance processing.

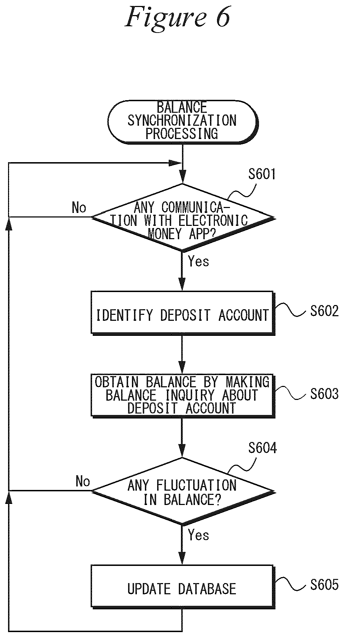

FIG. 6 is a flowchart showing an example of balance synchronization processing among different accounts performed by an electronic money business operator system according to an embodiment of the present invention. Such processing may be achieved with the electronic money business operator system 30 executing the electronic money service program under the control of the processor and by cooperating with various hardware resources. FIG. 6 shows an example in which the electronic money business operator system 30 synchronizes the balance of a user's electronic money account with the balance of the deposit account in response to a login of such user into the electronic money app on the information communication terminal device 40.

As shown in FIG. 6, the electronic money business operator system 30 monitors whether there has been any communication with an e-mail app on a user's information communication terminal device 40 (S601). As an example, the communication between the electronic money business operator system 30 and the e-mail app occurs when the user starts the e-mail app. It may also occur at the time of login associated with the start of the e-mail app. As another example, the communication with the e-mail app occurs when the user selects the refresh button on the e-mail app screen. Alternatively, the e-mail app may communicate with the electronic money business operator system 30 on a regular basis during operation.

If the electronic money business operator system 30 determines that there has been a communication with the e-mail app (S601; Yes), the electronic money business operator system 30 refers to the user information database 312 to identify the deposit account associated with the electronic money account of the user who logged in (S602). The electronic money business operator system 30 then makes a balance inquiry about the deposit account to the financial institution system 20 that manages the identified deposit account of the user, and obtains the balance thereof (S603).

The electronic money business operator system 30 then refers to the transaction history database 314 to determine whether there has been a fluctuation in the balance of the deposit account (S604). For example, the electronic money business operator system 30 refers to the transaction history database 314, and compares the latest balance of the deposit account with the obtained balance of the deposit account to determine whether the balances match.

If the electronic money business operator system 30 determines that there is no fluctuation in the balance of the deposit account (S604; No), the electronic money business operator system 30 returns to monitoring whether there has been any communication with the e-mail app (S601). On the other hand, if the electronic money business operator system 30 determines that there has been a fluctuation in the balance of the deposit account (S604; Yes), the electronic money business operator system 30 adds the transaction history data that updated the balance to the transaction history database 314, and updates the balance in the user information database 312 accordingly (S605).

As described above, the electronic money business operator system 30 obtains the balance of the deposit account associated with the user's electronic money account in response to the communication with the electronic money app on the user's information communication terminal device 40, and sets the balance of the electronic money account with the obtained balance. Thereby, when the user uses the electronic money service, the balance of the electronic money account and the balance of the deposit account are synchronized.

It should be noted that, in the above-described example, the synchronization of the balance of the electronic money account with the balance of the deposit account is triggered by the communication between the electronic money app on the information communication terminal device 40 and the electronic money business operator system 30, but the present disclosure is not limited to the above. For example, the electronic money business operator system 30 may make a balance inquiry about the user's deposit account in the financial institution system 20 to obtain the balance thereof, via a reference system API, in response to a notification of a fluctuation in the balance of the deposit account from the financial institution system 20, and the electronic money business operator system 30 may reflect the obtained balance in the balance of the user's electronic money account. Alternatively, the electronic money business operator system 30 may periodically or irregularly make balance inquiries about the user's deposit account in the financial institution system 20 to obtain the balance thereof, and the electronic money business operator system 30 may reflect the obtained balance in the balance of the user's electronic money account.

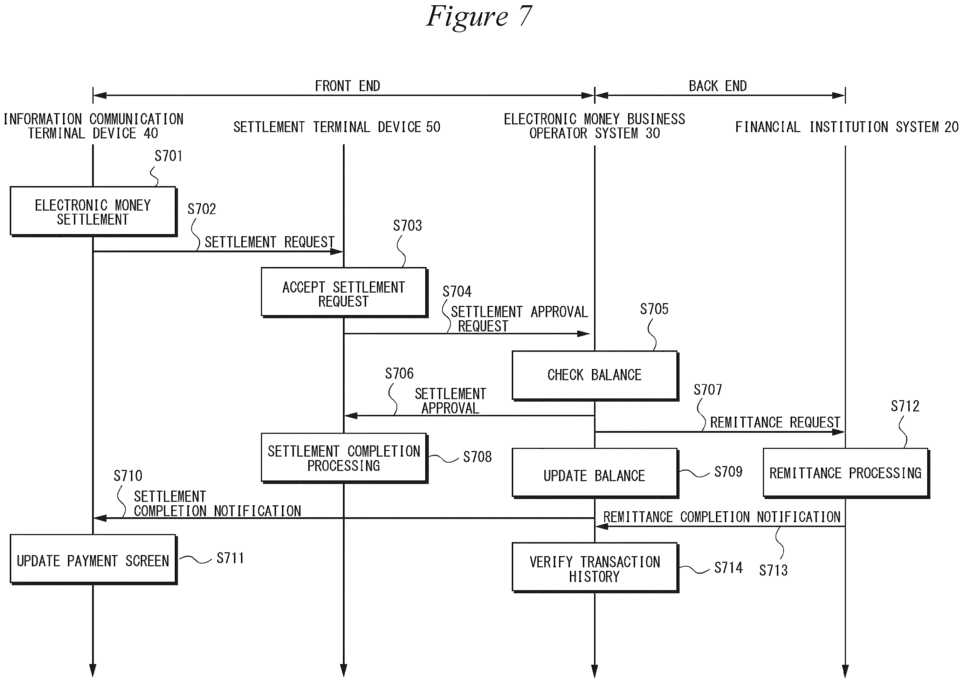

FIG. 7 is a sequence diagram for describing an example of electronic money settlement processing in an electronic money service provided by an electronic money service system according to an embodiment of the present invention. FIG. 7 shows the flow of processing in the case of the user making payment by electronic money when purchasing merchandise, and the like, at an affiliated store. On the affiliated store side, the price of the merchandise may be entered into the settlement terminal device 50. It should be noted that some parts of the processing shown in FIG. 7 may be performed in parallel, and are not necessarily performed in the order described below. The order of some parts of the processing may be switched (the same will apply hereinafter). The electronic money settlement processing may be divided into and considered as: front-end processing between the information communication terminal device 40 and the electronic money business operator system 30 through the settlement terminal device 50; and back-end processing between the electronic money business operator system 30 and the financial institution system 20.

In other words, as shown in FIG. 7, a user who wishes to make settlement by electronic money presents an information communication terminal device 40 to the affiliated store (S701). In the case of a so-called barcode-based electronic money settlement, the user starts an electronic money app on the information communication terminal device 40, causes the user interface unit 430 to display a barcode, and causes the settlement terminal device 50 to read the barcode. Thereby, the information necessary for the electronic money settlement is notified, as a settlement request, from the information communication terminal device 40 to the settlement terminal device 50 (S702). Alternatively, in the case of a so-called contactless electronic money settlement, the user brings the information communication terminal device 40 close to the settlement terminal device 50 or places the information communication terminal device 40 over the settlement terminal device 50 to thereby send a settlement request from the information communication terminal device 40 to the settlement terminal device 50.

Upon accepting the settlement request from the information communication terminal device 40 (S703), the settlement terminal device 50 generates a settlement approval request based on the settlement request and the entered price, and sends it to the electronic money business operator system 30 (S704).

Upon receiving the settlement approval request from the settlement terminal device 50, the electronic money business operator system 30 checks whether there is a sufficient balance for the settlement in the user's electronic money account based on the received settlement approval request (S705). If the electronic money business operator system 30 determines that there is a sufficient balance in the user's electronic money account for the settlement, the electronic money business operator system 30 sends a settlement approval to the settlement terminal device 50 (S706). In addition, the electronic money business operator system 30 sends a remittance request to the financial institution system 20 (S707). The remittance request is a request to transmit funds equivalent to the payment from the user's deposit account to the deposit account of the affiliated store.

Upon receiving the settlement approval, the settlement terminal device 50 performs processing of completing the settlement by electronic money (S708). The settlement terminal device 50 may display and/or signal the user with a sign tone signifying that the settlement has been completed, as well as record the settlement transaction. Thereby, from the affiliated store's perspective, the sales transaction for the user has been completed, and from the user's perspective, the purchase transaction with the affiliated store has been completed, and the merchandise, and the like, will be delivered.

The electronic money business operator system 30 updates the user's electronic money account after the settlement approval (S709). In other words, the electronic money business operator system 30 updates the transaction history database 314 by adding transaction history data in which the monetary value information equivalent to the payment is deducted from the balance of the user's electronic money account to the transaction history database 314, and updates the balance of the user's electronic money account in the user information database 312 accordingly. The electronic money business operator system 30 subsequently sends a settlement completion notification to the information communication terminal device 40 indicating that the settlement by electronic money has been completed (S710). The settlement completion notification may contain information indicating the balance of the electronic money account after settlement.

Upon receiving the settlement completion notification, the information communication terminal device 40 displays the latest balance of the electronic money account on the user interface unit 430 based on the received settlement completion notification, and displays that the settlement has been successfully completed (S711).

The above description represents the front-end processing between the information communication terminal device 40 and the electronic money business operator system 30 through the settlement terminal device 50.

On the other hand, as back-end processing, upon receiving the remittance request from the electronic money business operator system 30, the financial institution system 20 performs remittance processing based on the received remittance request (S712). In other words, in response to the remittance request, the financial institution system 20 immediately withdraws the funds equivalent to the payment from the user's deposit account and deposits such money amount into the deposit account of the affiliated store, whereby, the affiliated store will be able to immediately receive the payment made by the user through electronic money settlement in its own deposit account.

Upon completion of the remittance processing, the financial institution system 20 sends a remittance completion notification to the electronic money business operator system 30 (S713). Upon receiving the remittance completion notification, the electronic money business operator system 30 performs verification of the transaction history in the transaction history database 314 (S714). More specifically, the electronic money business operator system 30 verifies whether the balance indicated by the transaction history data matches the balance of the deposit account.

Optionally, after receiving the remittance completion notification from the financial institution system 20, the electronic money business operator system 30 may notify the affiliated store that the deposit has been made to the deposit account. The deposit notification may be sent to the settlement terminal device 50 or an information communication terminal device registered in association with the affiliated store (*e.g*., a registered e-mail address).

As described above, the electronic money business operator system 30 performs the electronic money settlement by a user, as before, in the front-end, and the electronic money business operator system 30 makes a request to the financial institution system 20 to perform a remittance from the user's deposit account to the deposit account of the affiliated store in the back-end, and the funds equivalent to the amount withdrawn from the user's deposit account will thereby be deposited into the deposit account of the affiliated store.

It should be noted that, although the above description represents the example of electronic money settlement by the user at an affiliated store being described as an aspect of an electronic money service, but the present disclosure is not limited thereto. For example, another aspect of the electronic money service may be the remittance of electronic money (transfer of funds) between electronic money accounts of the same or different users. In this case, according to a remittance instruction from a user (remitter), the electronic money business operator system 30 deducts the monetary value information equivalent to the remittance amount from the balance of the remitter's electronic money account, and provides a remittance instruction to the financial institution system 20 to make a remittance from the remitter's deposit account to the deposit account of the user (beneficiary). Thereby, funds equivalent to the remittance amount are deposited into the beneficiary's deposit account and the balance increases, and the balance of the beneficiary's electronic money account also increases by the monetary value information equivalent to the remittance amount.

### (Example)

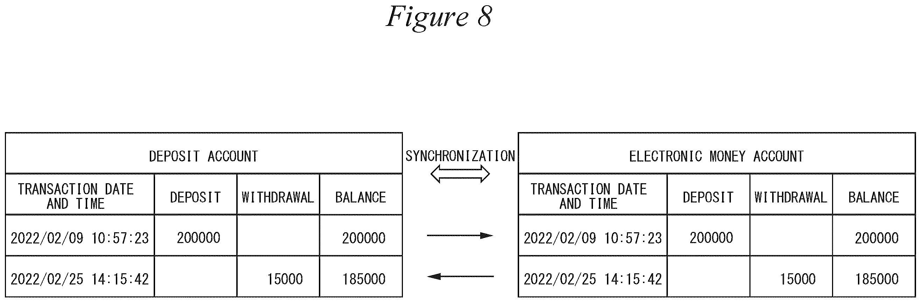

FIG. 8 is a diagram for describing an example of synchronization among different accounts in an electronic money service according to an embodiment of the present invention. Specifically, FIG. 8 shows how a user's deposit account is synchronized with his/her electronic money account. In the following example, the unit of monetary value information of the electronic money account is shown as points.

More specifically, as shown in FIG. 8, suppose that a deposit of 200,000 yen is made to the user's deposit account on February 9, 2022, and the balance becomes 200,000 yen. Accordingly, the balance of the electronic money account becomes 200,000 points.

Next, suppose that the user purchased merchandise, and the like, in the amount of 15,000 yen at an affiliated store by using electronic money settlement on February 25, 2022. As a result, the balance of the user's electronic money account will be 185,000 points, and the balance of the user's deposit account will be 185,000 yen because the funds of 15,000 yen will be remitted from the user's deposit account to the deposit account of the affiliated store.

As described above, according to the present embodiment, the balance of a user's deposit account fluctuates due to the deposit into the deposit account or due to electronic money settlement, and the balance of the electronic money account also fluctuates accordingly, and the balances of both accounts are therefore kept in synchronization. In addition, if electronic money is remitted (transfer of funds) from another user, the balance in the deposit account of the user who is the beneficiary will fluctuate, and the balance of the electronic money account will also fluctuate accordingly, and the balances of both accounts are therefore kept in synchronization.

### [Second Embodiment]

The present embodiment is a variation of the above-described embodiment and is characterized in that the balance of the user's electronic money account is synchronized with the credit balance of the credit card account. More specifically, the user's electronic money account is set with monetary value information equivalent to the credit balance based on the credit line given to the user by a credit card business operator. With respect to a debit card, the balance of the deposit account can be regarded as a credit line, and in this sense the invention can be similarly applied even to a debit card.

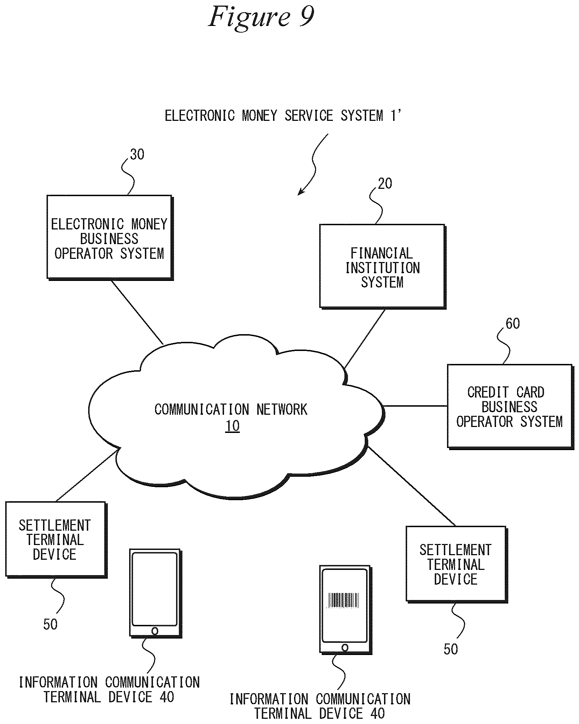

FIG. 9 is a block diagram showing an example of an electronic money service system according to an embodiment of the present invention. The electronic money service system 1' shown in FIG. 9 differs from the electronic money service system 1 shown in FIG. 1 in that a credit card business operator system 60 is added, and several systems and apparatuses are configured accordingly.

The credit card business operator system 60 is a computer system managed and operated by a credit card business operator or its entrusted party. More specifically, the credit card business operator system 60, as is known, manages the credit card accounts of members (users) who have undergone credit screening, and performs processing related to credit card settlements. At the time of credit card settlement, upon receiving a settlement approval request from the settlement terminal device 50, the credit card business operator system 60 may check the user's credit balance and send a settlement approval to the settlement terminal device 50. In addition, the credit card business operator system 60 reduces the credit balance of the user's credit card account. Furthermore, the credit card business operator system 60 aggregates the usage amount based on the billing closing date and requests the financial institution system 20 to debit the billing amount from the user's deposit account. The user's credit balance fluctuates according to the credit card settlement usage amount.

In addition, based on a credit amount approval request from the electronic money app on the information communication terminal device 40, the credit card business operator system 60 checks the credit balance and sends a credit amount approval to the information communication terminal device 40. The credit amount approval request corresponds to the settlement approval request in the case of credit card usage. When the user starts an electronic money app on the information communication terminal device 40, a credit amount approval request may be sent to the credit card business operator system 60. Alternatively, when the electronic money app on the information communication terminal device 40 attempts to display the available amount on the user interface, the electronic money app may send a credit amount approval request to the credit card business operator system 60.

Upon receiving a credit amount approval responding to the credit amount approval request from the credit card business operator system 60, the electronic money app on the information communication terminal device 40 sends a credit amount setting request prepared based on the credit amount approval to the electronic money business operator system 30. Upon receiving the credit amount setting request from the information communication terminal device 40, the electronic money business operator system 30 sets the balance of the user's electronic money account in the user information database 312 to the credit amount based on the received credit amount setting request.

In addition, when a settlement is made by electronic money, the electronic money app on the information communication terminal device 40 notifies the credit card business operator system 60 of the usage of the credit amount equivalent to the settled payment. Alternatively, the settlement terminal device 50 may identify the credit card business operator system 60 based on the settlement request, and may notify the credit card business operator system 60 of the usage of the credit amount equivalent to the settled payment, on behalf of the user. Thereby, the credit card business operator system 60 deducts the amount equivalent to the settled payment from the user's credit balance.

### (Example)

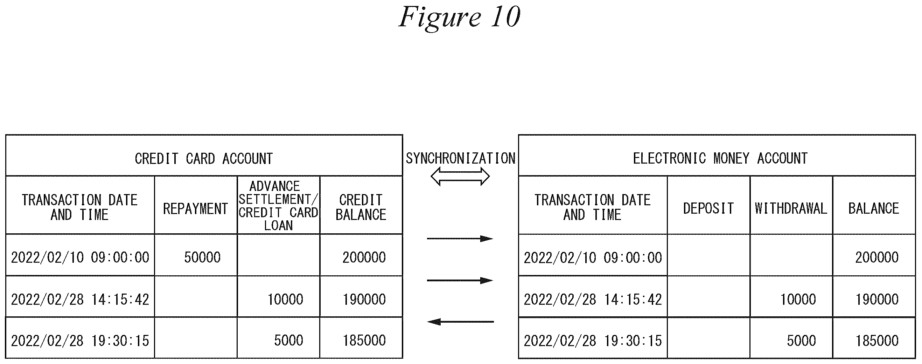

FIG. 10 is a diagram for describing an example of synchronization among different accounts in an electronic money service according to an embodiment of the present invention. Specifically, FIG. 10 shows how a user's electronic money account is synchronized with his/her credit card account. In the following example, the unit of monetary value information of the electronic money account is shown as points. In addition, suppose that the user's credit limit amount is set to 200,000 yen.

More specifically, as shown in FIG. 10, suppose that, for the user's credit card, a payment of 50,000 yen was debited from the deposit account on February 10, 2022, and the credit balance became 200,000 yen. In other words, this means repayment of the payment made by way of the credit card settlement. Upon receiving a credit amount approval at a predetermined time, the electronic money app requests the electronic money business operator system 30 to set the credit amount based on such credit amount approval. Therefore, the balance of the electronic money account will be 200,000 points.

Next, suppose that the user purchased merchandise, and the like, in the amount of 10,000 yen at an affiliated store of the credit card by way of credit card settlement on February 28, 2022. Therefore, the credit balance of the user's credit card becomes 190,000 yen, and accordingly, the balance of the user's electronic money account will be 190,000 points.

Subsequently, suppose that a user purchased merchandise, and the like, in the amount of 5,000 yen at an affiliated store of the electronic money on the same day, from the credit line of a credit card by way of electronic money settlement. Accordingly, the balance of the user's electronic money account becomes 185,000 points, and further, the credit balance of the user's credit card account becomes 185,000 yen accordingly.

As described above, according to the present embodiment, the balance of the electronic money account also fluctuates according to the fluctuation in the credit balance of the credit card account in association with the user's credit card settlements, and the balances of both accounts are therefore kept in synchronization. In addition, the credit balance of the credit card account also fluctuates according to the fluctuation of the balance of the electronic money account in association with the user's electronic money settlements, and thus, the balances of both accounts are kept in synchronization.

### [Third Embodiment]

The present embodiment is a variation of the above-described embodiments and is characterized in that the balance the user's electronic money account is synchronized based on the balance of the deposit account and the credit balance of the credit card account. More specifically, the user's electronic money account is set with monetary value information equivalent to the sum of the balance of the deposit account and the credit balance based on the credit line given to the user by a credit card business operator.

The electronic money business operator system 30 makes a balance inquiry about the user's deposit account and sets a first balance of the user's electronic money account based on the obtained balance. In addition, a second balance of the user's electronic money account is set based on the credit amount of a credit amount setting request by the electronic money app on the user's information communication terminal device 40. The electronic money business operator system 30 manages the sum of the first balance and the second balance as the balance of the user's electronic money account.

As mentioned above, the user may make settlement by electronic money using the electronic money app on the information communication terminal device 40. In this case, the user may choose to settle from the first balance associated with the deposit account or from the second balance associated with the credit balance. The settlement terminal device 50 sends a settlement approval request based on the chosen settlement method and settlement amount to the electronic money business operator system 30 and receives a settlement approval.

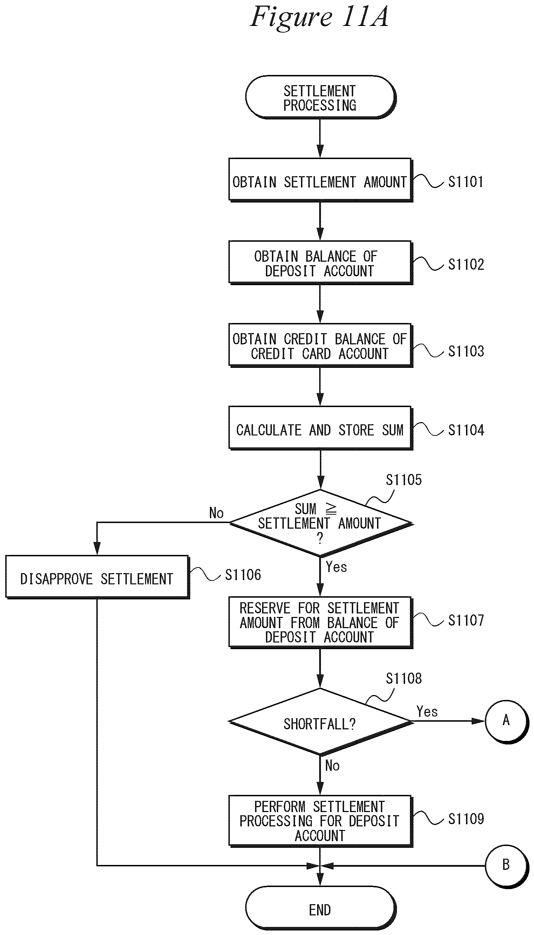

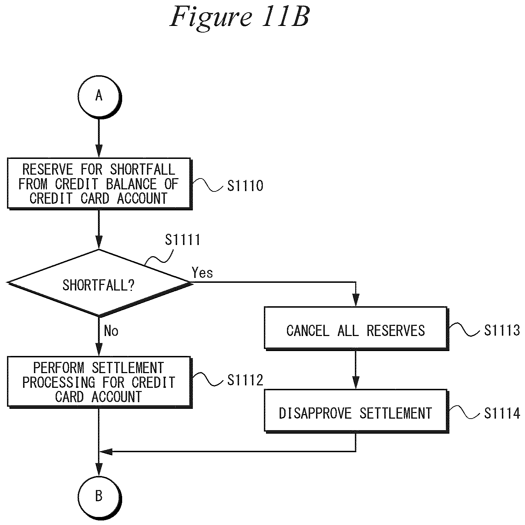

FIGS. 11A and 11B are flowcharts showing an example of electronic money settlement processing in an electronic money service provided by an electronic money service system according to an embodiment of the present invention.

First, a user who wishes to make settlement by electronic money presents an information communication terminal device 40 to an affiliated store. Thereby, the information necessary for the electronic money settlement is notified, as a settlement request, from the information communication terminal device 40 to a settlement terminal device 50. Subsequently, as shown in FIG. 11A, the settlement terminal device 50 sends a settlement approval request based on the settlement request to an electronic money business operator system 30, and the electronic money business operator system 30 receives the settlement approval request from the settlement terminal device 50 (S 1101).

In accordance with the settlement approval request, the electronic money business operator system 30 makes a balance inquiry about the user's deposit account to the financial institution system 20 and obtains the balance thereof (S1102). Subsequently to or in parallel with the above, in accordance with the settlement approval request, the electronic money business operator system 30 makes a credit balance inquiry about the user's credit card account to the credit card business operator system 60 and obtains the credit balance thereof (S1103).

Next, the electronic money business operator system 30 calculates the sum of the obtained balance of the deposit account and the obtained credit balance of the credit card account, and stores the sum temporarily (S1104). Subsequently, the electronic money business operator system 30 determines whether the settlement amount (usage amount) is less than or equal to the calculated sum (S 1105).

If the electronic money business operator system 30 determines that the settlement amount is not less than or equal to the calculated sum (S1105; No), it notifies the settlement terminal device 50 of the settlement disapproval that the settlement cannot be made (S1106) and terminates the processing.

On the other hand, if the electronic money business operator system 30 determines that the settlement amount is less than or equal to the calculated sum (S1105; Yes), it requests the financial institution system 20 to reserve an amount equivalent to the required settlement amount from the balance of the user's deposit account (S1107). Subsequently, in accordance with the response from the financial institution system 20 to the request, the electronic money business operator system 30 determines whether the amount reserved for the settlement amount is insufficient (S1108).

If the electronic money business operator system 30 determines that the amount reserved is applicable to the settlement amount, *i.e*., the amount reserved is not insufficient for the settlement amount (S1108; No), it requests the financial institution system 20 to perform settlement processing (S1109). More specifically, the electronic money business operator system 30 may send a remittance request to the financial institution system 20. The remittance request is a request to transmit funds equivalent to the payment from the user's deposit account to the deposit account of the affiliated store. In addition, the electronic money business system 30 sends a settlement approval to the settlement terminal device 50. Thereby, settlement by way of electronic money is completed on the settlement terminal device 50. In addition, the latest balance of the electronic money account will be displayed on the user interface of the information communication terminal device 40.

On the other hand, if the electronic money business operator system 30 determines that the amount reserved cannot be applied to the settlement amount, *i.e*., the amount reserved is insufficient for the settlement amount (S1108; Yes), it requests the credit card business operator system 60 to reserve an amount equivalent to the shortfall from the credit balance of the user's credit card account (S1110 of FIG. 11B). Subsequently, in accordance with the response from the financial institution system 20 to the request, the electronic money business operator system 30 determines whether the amount reserved for the settlement amount is insufficient (S 1 1 11).

If the electronic money business operator system 30 determines that the amount reserved is applicable to the settlement amount, *i.e*., the amount reserved is not insufficient for the settlement amount (S1111; No), it requests the credit card business operator system 60 to perform settlement processing (S1112). Thereby, settlement by way of electronic money is completed on the settlement terminal device 50. In addition, the latest balance of the electronic money account will be displayed on the user interface of the information communication terminal device 40.

On the other hand, if the electronic money business operator system 30 determines that the amount reserved cannot be applied to the settlement amount, *i.e*., the amount reserved is insufficient for the settlement amount (S1111; Yes), it requests the financial institution system 20 and/or the credit card business operator system 60 to cancel the amounts reserved (S1113). Subsequently, the electronic money business operator system 30 notifies the settlement terminal device 50 of the settlement disapproval (S1114) and finishes the processing.

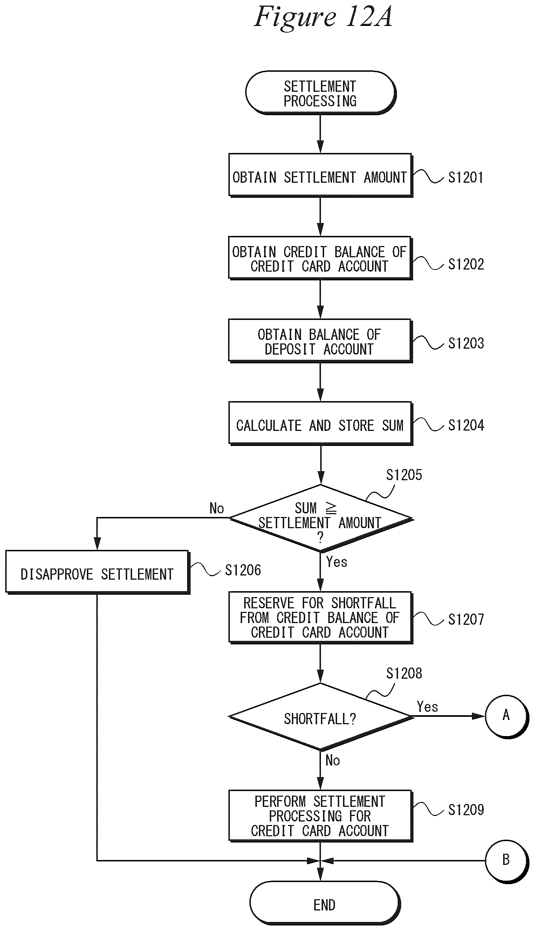

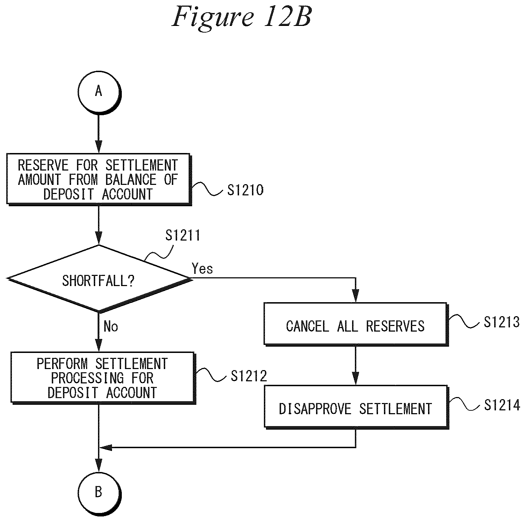

FIGS. 12A and 12B are flowcharts showing another example of electronic money settlement processing in an electronic money service provided by an electronic money service system according to an embodiment of the present invention. More specifically, the flowcharts shown in FIGS. 12A and 12B are the same as the flowcharts shown in FIGS. 11A and 11B above, except for the point that the settlement is made in an electronic money settlement by reserving the settlement amount from the credit balance of the credit card account first, and thus, the description of such flowcharts is omitted.

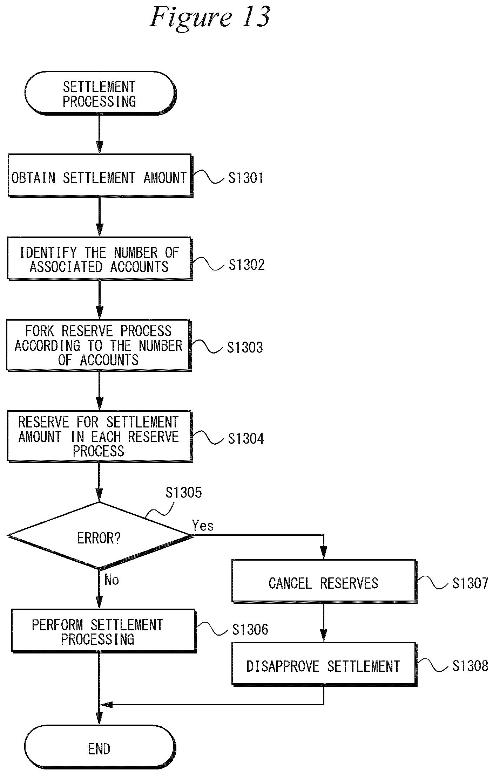

FIG. 13 is a flowchart showing a further example of electronic money settlement processing in an electronic money service provided by an electronic money service system according to an embodiment of the present invention. More specifically, FIG. 13 shows a more generalized flowchart such that electronic money settlement processing may be applied to the case where multiple different accounts exist. The description of the processing which is either the same or substantially the same as the processing of the flowcharts described above will be omitted as appropriate.

More specifically, as shown in FIG. 13, when an electronic money business operator system 30 obtains the settlement amount (S1301), it identifies the number of different accounts associated with the user's electronic money account (S1302). For example, as described above, if a deposit account and a credit card account are associated with the user's electronic money account, the number of accounts is two.

Subsequently, the electronic money business operator system 30 forks the reserve process according to the number of accounts identified (S1303). The term "fork" refers to a situation where an entity (process) of a program running on a computing device creates a copy of itself and executes it as a new process.

In performing the reserve process, the electronic money business operator system 30 performs processing such that the amount equivalent to the settlement amount is reserved in the different accounts (S1304). In the example described above, a first reserve process makes a request to the financial institution system 20 for a reserve, and a second reserve process makes a request to the credit card business operator system 60 for a reserve.

The electronic money business operator system 30 determines whether an error is present in any of the reserve processes as a result of the reserve requests (S1305). If the electronic money business operator system 30 determines that there are no errors in any of the reserve processes (S1305; No), it performs the settlement processing (S1306). On the other hand, if the electronic money business operator system 30 determines that there is an error in one of the reserve processes (S1305; Yes), it cancels the reserve (S1307) and performs settlement disapproval (S1308).

It should be noted that in electronic money settlements, there are various forms of giving priority to the use of either the balance of the deposit account or the credit balance of the credit card account associated with the electronic money account. As an example, the user may set the priority of the use in advance on the user's My Page on the website, or make a choice on the screen on the settlement terminal device 50 at the time of settlement. As another example, priority may be given to cash settlement (deposit account) at an affiliated store (*e.g*., with a settlement terminal device 50 or on the affiliated store's My Page). As a further example, the higher (or lower) of the balance and the credit balance may be given priority and selected.

### (Example)

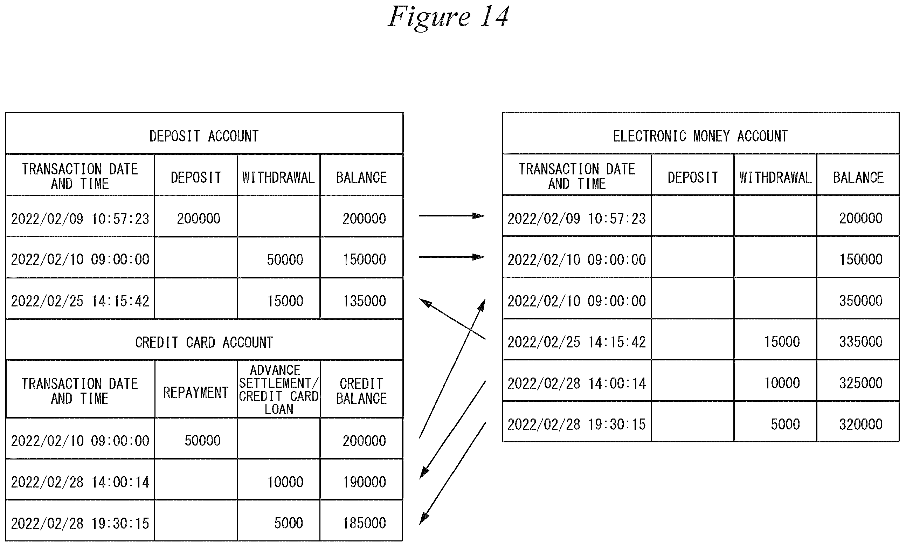

FIG. 14 is a diagram for describing an example of synchronization among different accounts in an electronic money service according to an embodiment of the present invention. Specifically, FIG. 14 shows how a user's electronic money account is synchronized with his/her deposit account and credit card account. In the following example, the unit of monetary value information of the electronic money account is shown as points. In addition, suppose that the user's credit limit amount is set to 200,000 yen.

More specifically, as shown in FIG. 14, suppose that a deposit of 200,000 yen is made to the user's deposit account on February 9, 2022, and the balance becomes 200,000 yen. Accordingly, the balance of the electronic money account will be 200,000 points.

Next, for the user's credit card, a payment of 50,000 yen was debited from the deposit account on February 10, 2022, and the balance of the deposit account became 150,000 yen. Thereby, since the credit line of the credit card returns to the credit limit amount, the credit balance will be 200,000 yen. Upon receiving a credit amount approval at a predetermined time, the electronic money app requests the electronic money business operator system 30 to set the credit amount based on such credit amount approval. Therefore, the balance of the electronic money account will be 350,000 points.

Next, suppose that the user purchased merchandise, and the like, in the amount of 15,000 yen at an affiliated store by using electronic money settlement on February 25, 2022. As a result, the balance of the user's electronic money account will be 335,000 points, and the balance of the user's deposit account will be 135,000 yen because the funds of 15,000 yen will be remitted from the user's deposit account to the deposit account of the affiliated store.

Next, suppose that the user purchased merchandise, and the like, in the amount of 10,000 yen at an affiliated store of the credit card by way of credit card settlement on February 28, 2022. Therefore, the credit balance of the user's credit card will be 190,000 yen, and accordingly, the balance of the user's electronic money account will be 325,000 points.

Subsequently, suppose that a user purchased merchandise, and the like, in the amount of 5,000 yen at an affiliated store of the electronic money on the same day, from the credit line of a credit card in an electronic money settlement. Accordingly, the balance of the user's electronic money account will be 320,000 points, and further, the credit balance of the user's credit card account will be 185,000 yen accordingly.

As described above, according to the present embodiment, the balance of the electronic money account also fluctuates according to the fluctuation in the balance of the deposit account and/or the credit balance of the credit card account in association with the user's electronic money settlements. Therefore, if the balance of the electronic money account is set so as to be the sum of the balance of the deposit account and the credit balance of the credit card account, the user can use the electronic money settlement within the range of the sum of both accounts.

The above-described respective embodiments are illustrations for describing the present invention, and are not intended to limit the present invention only to these embodiments. The present invention may be implemented in various forms, as long as they do not deviate from the gist of the invention.

For example, the steps, actions, or functions in the method disclosed in the present specification may be implemented in parallel or in different order, unless there is no inconsistency in the results. The described steps, actions, and functions are provided as examples only and some of the steps, actions, and functions may be omitted and may be performed as one entity by being combined with each other, and other steps, actions, or functions may be added, to the extent that they do not deviate from the gist of the invention.

In addition, various embodiments are disclosed in the present specification, but specific features (technical matters) in one embodiment may be added to other embodiments with appropriate improvements, or may be replaced with specific features in such other embodiments, and such embodiments are also included in the gist of the present invention.

### LIST OF REFERENCE SIGNS

1 ... Electronic money service system
10 ... Communication network
20 ... Financial institution system
22 ... Channel system
24 ... Accounting system
26 ... Information system
30 ... Electronic money business operator system
   310 ... Operation management database
   312 ... User information database
   314 ... Transaction history database
   320 ... Account management unit
   322 ... Balance synchronization unit
   330 ... Transaction management unit
   332 ... Funds transfer management unit
40 ... Information communication terminal device
   410 ... Control unit
      412 ... Processor
      414 ... Input/output control unit
   420 ... Storage unit
   430 ... User interface unit
   440 ... Communication interface unit
50 ... Settlement terminal device
60 ... Credit card business operator system

## Claims

1. An electronic money settlement method implemented by an electronic money business operator system that provides an electronic money service, the method comprising, by the electronic money business operator system:
managing, for each user who uses the electronic money service, an electronic money account of the user and a deposit account of the user by associating the electronic money account and the deposit account with each other;
virtually setting a balance of the electronic money account to be linked to a balance of the deposit account; and
making a request for remittance processing to a financial institution system such that, in response to an electronic money settlement, a money amount for the settlement is directly remitted from the deposit account associated with the electronic money account to a deposit account at a financial institution of a beneficiary who should receive the money amount through the settlement.

2. The electronic money settlement method according to claim 1, wherein the virtually setting includes virtually setting the balance of the electronic money account of the user based on the balance of the deposit account obtained by making a balance inquiry about the deposit account of the user to the financial institution system.

3. The electronic money settlement method according to claim 2, wherein the virtually setting includes making a balance inquiry about the deposit account of the user if there is a communication from an electronic money app on an information communication terminal device of the user.

4. The electronic money settlement method according to claim 1, further comprising, by the electronic money business operator system, receiving a settlement approval request from a settlement terminal device in the electronic money settlement, and sending, to the settlement terminal device, a settlement approval indicating approval of the settlement based on the balance of the electronic money account.

5. The electronic money settlement method according to claim 4, wherein the making a request for the remittance processing includes sending a remittance request to the financial institution system based on the settlement approval.

6. The electronic money settlement method according to claim 1, further comprising, by the electronic money business operator system, reducing the balance of the electronic money account according to the money amount for the settlement.

7. The electronic money settlement method according to claim 6, further comprising, upon receiving a remittance completion notification indicating that the financial institution system has completed the remittance processing, by the electronic money business operator system, verifying, based on the remittance completion notification, whether the balance of the electronic money account after the reduction matches the balance of the deposit account.

8. An electronic money settlement method implemented by an electronic money business operator system that provides an electronic money service, the method comprising, by the electronic money business operator system:
managing, for each user who uses the electronic money service, an electronic money account of the user and at least one account other than the electronic money account by associating the electronic money account and the at least one account with each other; and
virtually setting a balance of the electronic money account based on a balance of the at least one account.

9. The electronic money settlement method according to claim 8, wherein the at least one account is at least one of the user's deposit account or the user's credit card account.

10. The electronic money settlement method according to claim 9, wherein the virtually setting the balance includes virtually setting the balance based on a balance of the deposit account and a credit balance of the credit card account.

11. The electronic money settlement method according to claim 10, wherein the virtually setting the balance includes virtual setting the balance such that there is a link to a fluctuation in the balance of the deposit account.

12. The electronic money settlement method according to claim 10 or 11, wherein the virtually setting the balance includes virtually setting the balance such that there is a link to a fluctuation in the credit balance of the credit card account.

13. The electronic money settlement method according to claim 12, wherein the virtually setting the balance includes, by the electronic money business operator system, setting the balance of the electronic money account based on a credit amount setting request sent from an electronic money app on an information communication terminal device of the user.

14. The electronic money settlement method according to claim 13, wherein the credit amount setting request is prepared based on a credit amount approval indicating approval of a credit amount responding to a credit amount approval request sent to a credit card business operator system by the electronic money app.

15. An electronic money business operator system that provides an electronic money service, comprising:
means for managing, for each user who uses the electronic money service, an electronic money account of the user and a deposit account of the user by associating the electronic money account and the deposit account with each other;
means for virtually setting a balance of the electronic money account to be linked to a balance of the deposit account; and
means for making a request for remittance processing to a financial institution system such that, in response to an electronic money settlement, a money amount for the settlement is directly remitted from the deposit account associated with the electronic money account to a deposit account at a financial institution of a beneficiary who should receive the money amount through the settlement.
